# EUROPÄISCHE PATENTANMELDUNG

(11) **EP 4 098 483 A1**
(43) Veröffentlichungstag der Anmeldung: **07.12.2022**
(21) Anmeldenummer: 22177098.5
(22) Anmeldetag: 02.06.2022
(51) Int. Cl.: B60N 2/90, B60N 2/42, B60N 2/28

(54) **VERBESSERTER SITZ UND VERFAHREN ZU DESSEN BETRIEB**

(30) Priorität: 02.06.2021 DE 102021114338
(71) Anmelder: Abraham, Nikil, 78467 Konstanz (DE)
(72) Erfinder: Abraham, Nikil, 78467 Konstanz (DE)
(74) Vertreter: Tahhan, Nader Isam Mark

(57) **Zusammenfassung**

Die Erfindung betrifft das Gebiet der Sitze wie insbesondere Kindersitze für Verkehrsmittel.

Der Sitz umfasst einen Protektor in Form eines ersten aufblasbaren Bereichs (1A, 2A, 3A, 4A, 5A, 6A), mit einer Innenkontur (1B, 2B, 3B, 4B, 5B, 6B), dessen Innendruck mittels Fluidzu- und -abflusses änderbar ist, wobei der Sitz einen Druckgenerator in Form eines Mittels zur Förderung von Fluid in besagten Bereich (1A, 2A, 3A, 4A, 5A, 6A) umfasst, welches im Falle eines Aufpralls des Transportmittels mittels eines Auslösers aktivierbar ist. Der Sitz weist einen Controller als Mittel zur gezielten Steuerung des Fluidflusses auf. Als Mittel zur Förderung umfasst der Sitz mindestens einen weiteren aufblasbaren Bereich (1A, 2A, 3A, 4A, 5A, 6A, 16A).

Die Erfindung betrifft auch ein Verfahren zum Schutz eines in einem Sitz befindlichen Insassen unter bevorzugter Verwendung des erfindungsgemäßen Sitzes.

## Beschreibung

### Einleitung

Die Erfindung betrifft das Gebiet der Sitze wie insbesondere Kindersitze für Verkehrsmittel. Insbesondere betrifft die Erfindung einen aufblasbaren Sitz mit verbesserter Sicherheit für den Insassen, und ein Verfahren zum Schutz eines in einem solchen Sitz befindlichen Insassen.

### Stand der Technik und Nachteile

Sitze zum sicheren Transport von Insassen in Fahrzeugen sind hinlänglich bekannt. Sie haben die Aufgabe, einen Insassen wie einen Erwachsenen oder ein Kind während des Transports in bequemer Haltung aufzunehmen und im Falle eines Unfalls in ausreichendem Maße zu schützen. Sitze für Erwachsene sind typischerweise im Wesentlichen fest mit dem Fahrzeug verbaut. Spezielle, oft nachträglich am (Erwachsenen-)Sitz anbringbare Kindersitze kommen immer dann zum Einsatz (und sind zumeist auch behördlich vorgeschrieben), wenn der Insasse eine Körpergröße hat, die es ihm noch nicht ermöglicht, sicher auf einem normalen Fahrzeugsitz Platz zu nehmen, um dort im Falle eines Unfalls vom Sicherheitsgurt zurückgehalten und ggf. weiteren Sicherheitsvorrichtungen (Airbag) geschützt zu werden.

Die häufigste Bauform derartiger Kindersitze umfasst eine Basis, ein Rücken-, sowie zwei Seitenteile, die einen Kern aus festem, aber zugleich leichtem Kunststoff (z.B. Schaum-Polystyren) aufweisen. Dieser Kern ist zumindest dort, wo er mit dem Insassen in Kontakt kommt, mit hautfreundlichem und weichem Material ummantelt. Der Kindersitz kann einstückig oder mehrteilig aufgebaut sein, um ihn im Falle des Nichtgebrauchs platzsparend verstauen zu können. Um den Insassen im Falle einer Fahrzeugkollision im Sitz zu halten, aber auch, um ihn während der normalen Fahrt am unerwünschten Verlassen des Sitzes zu hindern, umfasst der Kindersitz häufig einen ein- oder mehrteiligen Gurt. Andere Ausführungsformen nutzen den ohnehin im Fahrzeug vorhandenen (Erwachsenen-)Gurt, welcher dann in geeigneter Weise vor dem Körper des Kindes entlanggeführt wird, und sowohl den Kindersitz am Fahrzeug, als auch das Kind im Kindersitz halten soll.

Nachteilig an den bekannten Lösungen ist das häufig immer noch verhältnismäßig hohe Gewicht des Kindersitzes, und die Tatsache, dass auch ein zusammengeklappter Kindersitz weiterhin einen erheblichen Platzbedarf hat.

Aus diesem Grunde sind aus dem Stand der Technik auch aufblasbare Kindersitze bekannt.

Aus der Druckschrift US 2012 / 0 242 128 A1 ist ein aus mehreren Teilen zusammensetzbarer, mittels eines gemeinsamen Anschlusses befüllbarer, aufblasbarer Kindersitz bekannt, der zur Anbringung entgegen der Fahrtrichtung vorgesehen ist. Der Sitz ist vollständig entleer- und somit zusammenrollbar. Er ist jedoch somit ausschließlich als "Notsitz" gedacht, der zudem zwingend entgegen der Fahrtrichtung anzubringen ist.

Auch die Druckschrift US 5 292 176 A betrifft einen aufblasbaren Kindersitz. Er umfasst entweder ausschließlich aufblasbare Teile, oder eine seine Rückseite formende Platte, die sich über die gesamte Breite des Sitzes erstreckt und diesem Stabilität verleiht. Ein solcher Sitz wird jedoch, wenn er die beschriebene Platte umfasst, auch nach dem Ablassen der Luft eine signifikante Größe aufweisen. Ohne die Platte ist hingegen die mechanische Stabilität im Falle eines Unfalls unter Umständen nicht ausreichend.

Auch aus der Druckschrift US 5 516 188 A ist einen aufblasbarer Kindersitz bekannt. Dieser weist im zusammengefalteten Zustand die Form eines Koffers auf. Alle das Kind stützenden Flächen sind aufblasbar; somit ist auch dieser Sitz nur als "Notsitz" geeignet, da er über keine ausreichend hohe Stabilität verfügt, um bei Unfällen das Kind sicher zurückzuhalten und zu schützen. Zudem ist die vorgeschlagene Form und Größe knapp bemessen, so dass das Kind ggf. nur sehr wenig Bewegungsfreiheit hat.

Ein weiterer Sitz mit aufblasbaren Elementen ist aus der Druckschrift US 7 748 781 B2 bekannt. Der dort gezeigte Kindersitz umfasst eine Reihe von fluidisch miteinander verbundenen Kammern, die an der Innenseite einer Hartschale angebracht und mit Luft gefüllt sind. Im Falle eines Aufpralls kann dieser gemildert werden, indem die Luft aus den vom Insassen zusammengepressten Kammern in andere, weniger druckbelastete Kammern verteilt wird. Der Platzbedarf dieses Sitzes ist jedoch unabhängig vom Zustand der Kammern recht groß.

### Aufgabe der Erfindung und Lösung

Der Erfindung liegt demnach die Aufgabe zugrunde, eine Vorrichtung und ein Verfahren bereitzustellen, welche bzw. welches die Nachteile des Standes der Technik vermeidet.

Demnach soll der Sitz ein geringes Gewicht aufweisen, und optional bei Nichtgebrauch einen geringen Platzbedarf haben. Er soll während des normalen Gebrauchs dem Insassen eine große Bewegungsfreiheit, und im Falle eines Unfalls bestmögliche Sicherheit bieten, so dass er nicht nur als Notsitz, sondern als vollwertiger, für den Alltagsgebrauch gedachter Sitz verwendbar ist, ohne im Hinblick auf die Sicherheit Kompromisse einzugehen. Der Sitz soll zudem im Falle eines Aufpralls einen verbesserten Schutz des Insassen bieten.

Die Aufgabe wird durch einen Sitz nach Anspruch 1 sowie ein Verfahren nach nebengeordnetem Anspruch 10 gelöst. Vorteilhafte Ausführungsformen sind den jeweils abhängigen Unteransprüchen, der nachfolgenden Beschreibung sowie den Figuren zu entnehmen.

### Beschreibung

Zunächst erfolgt die Beschreibung des erfindungsgemäßen Sitzes. Alsdann wird ein Verfahren zum Schutz eines in einem Sitz befindlichen Insassen beschrieben.

Die Erfindung betrifft einen Sitz zur lösbaren Anbringung desselben am Sitz eines Transportmittels wie insbesondere eines Fahrzeugs, Flugzeugs, Zugs, oder Busses.

Der Sitz weist mindestens einen Protektor in Form eines ersten aufblasbaren Bereichs auf, welcher dem Insassen zugewandt ist, wobei der Innendruck dieses Bereichs mittels Fluidzu- und -abflusses änderbar ist.

Zumindest ein Teil des jeweiligen aufblasbaren Bereichs, nämlich die Innenkontur, erstreckt sich in Richtung des Insassen. Das bedeutet, dass sich bei einer Erhöhung des Druckes in einem Bereich dieser aufzublähen sucht, wodurch sich die Lage und/oder Form der Innenkontur ändert oder zu ändern sucht, und zwar in Richtung des Insassen. Gleiches gilt für ein Reduzieren des Druckes; die Innenkonturänderung erfolgt dann entgegengesetzt.

Der Sitz umfasst weiter einen Druckgenerator in Form eines Mittels zur Förderung von Fluid in besagten Bereich (Protektor) hinein (oder aus diesem Bereich hinaus), welches im Falle eines Aufpralls des Transportmittels mittels eines Auslösers aktivierbar ist. Anders ausgedrückt, das Mittel zur Förderung dient dem Erhöhen oder Verringern des Druckes in diesem Bereich, indem Fluid in diesen hinein- oder aus diesem herausgefördert wird.

Außerdem weist der Sitz (mindestens) einen Controller als Mittel zur gezielten Steuerung des Fluidflusses auf. Das Mittel zur gezielten Steuerung stellt sicher, dass Fluid in planvoll-vorherbestimmbarer Weise in besagten Bereich hinein- oder aus ihm herausfließen kann. Demgegenüber bieten auf einfache Weise, beispielsweise mittels Schläuchen oder angrenzenden Öffnungen, fluidisch miteinander gekoppelte Bereiche keine Möglichkeit der erfindungsgemäß "gezielten" Steuerung.

Auf diese Weise ist durch gezieltes, vom Controller gesteuerten und vom Druckgenerator bewirktes Ändern des Innendruckes des Protektors, also des ersten Bereichs, ein gezielter Fluidzu- oder -abfluss in den Protektor erreichbar, und somit ein verbesserter Unfallschutz durch diesen Bereich für den Insassen bereitstellbar. Der verbesserte Unfallschutz wird somit dadurch erreicht, dass im Falle eines Aufpralls Fluid in gezielter Weise in den Bereich gefördert wird, so dass mit diesem zum Zeitpunkt des Aufpralls eine erhöhte Dämpfung des sich aufgrund seiner Trägheit in Richtung dieses Bereichs bewegenden Kindes bereitstellbar ist. Anders ausgedrückt, der erfindungsgemäße Kindersitz (genauer: dessen Controller) kann in Abhängigkeit der jeweiligen Situation auf bestmögliche Weise den Fluidfluss steuern, den damit verbundenen Effekt eines Aufblasens oder Entleerens einsetzen, und somit den Insassen in optimaler Weise schützen.

Dies ist insbesondere dann vorteilhaft, wenn der Sitz mehrere solcher Bereiche (Protektoren) aufweist, von denen im Falle eines Aufpralls nur diejenigen einem erhöhten Druck ausgesetzt werden, die in dieser Situation auch einen Beitrag zum Unfallschutz leisten können. Demensprechend würde bei einem Frontalaufprall ein Rückenbereich und ein Gurt, bei einem Seitenaufprall hingegen der entsprechende Seitenbereich und der Kopfbereich eine Druckerhöhung mittels Fluidzuflusses erfahren. Typischerweise ist aufgrund der bei einem Aufprall sehr kurzen Reaktionszeit auch die in diesem Zeitraum förderbare Fluidmenge eng begrenzt. Der Vorteil der erfindungsgemäßen, gezielten Steuerung liegt also darin, dass diese begrenzte Fluidmenge in optimaler Weise zur Verbesserung des Unfallschutzes in der konkreten Situation nutzbar ist. Im Gegensatz dazu nutzen z.B. bekannte Kindersitze ein lediglich ungezieltes Ablassen des Fluids, was in manchen Situationen zu sub-optimalem Schutz für den Insassen führt. Zudem wird das Ablassen lediglich zum Zwecke der Energie-Dissipation eingesetzt, und nicht, um den Schutz an anderer Stelle zu verbessern.

Ferner umfasst der Sitz als Druckgenerator in Form des Mittels zur Förderung mindestens einen weiteren aufblasbaren Bereich mit einer zur Aufnahme von äußerem Druck eingerichteten Innen- oder Außenkontur. Das bedeutet, dass bei Druck auf diese Innen- oder Außenkontur der Innendruck des Bereichs, zu dem diese Innen- bzw. Außenkontur gehört, erhöhbar ist. Im Gegensatz zu den weiter oben beschriebenen Innenkonturen weist eine Außenkontur vom Insassen fort, beispielsweise zur Seite (Seitenbereich), nach hinten (Rückenbereich) oder nach unten (Basis). Auch mehrere solcher Außenkonturen sind möglich. Während die Innenkontur zur Interaktion mit dem Insassen vorgesehen ist, ist die Außenkontur zur Interaktion mit dem Fahrzeug bzw. Komponenten desselben (KFZ-Gurt, Fahrzeugsitz, Türe, ...) eingerichtet.

Der erste Bereich (Protektor) und der weitere Bereich (Druckgenerator) sind außerdem fluidisch dergestalt miteinander verbunden, dass bei einer Erhöhung des Druckes auf den weiteren Bereich ein passiver Fluidfluss von diesem zu dem ersten Bereich erreichbar ist. "Passiv" meint hier einen lediglich aufgrund des Druckes auf den weiteren Bereich zustande kommenden Fluidfluss. Erfindungsgemäß ist das Mittel zur Steuerung zwischen dem ersten und dem weiteren Bereich angeordnet.

Die Erfindung vermeidet somit die aus dem Stand der Technik bekannten Nachteile.

Ein Sitz der erfindungsgemäßen Art weist ein geringes Gewicht auf, da er größtenteils oder vollständig aus aufblasbaren Komponenten besteht. Ist er abnehmbar, so hat er bei Nichtgebrauch nach Ablassen der Luft einen geringen Platzbedarf. Er gewährt während des normalen Gebrauchs dem Insassen eine große Bewegungsfreiheit, und bietet im Falle eines Unfalls bestmögliche Sicherheit, so dass er nicht nur als Notsitz, sondern als vollwertiger, für den Alltagsgebrauch gedachter Sitz verwendbar ist, ohne im Hinblick auf die Sicherheit Kompromisse einzugehen. Aufgrund der gezielten Steuerung des zum Unfallschutz zur Verfügung stehenden Fluidmenge wird dieser weiter verbessert. Das Vorsehen eines weiteren aufblasbaren Bereichs als Druckgenerator erlaubt eine einfache und auf mechanische Komponenten weitgehend verzichtende Konstruktion. Der Vorteil der Erfindung liegt demnach in dem Verzicht auf zusätzliche energieverbrauchende Komponenten, die einer Fluidförderung dienen. Dies macht den Sitz unabhängig von Energiequellen, da die einzige, zum Fördern des Fluids benötigte Energie aus der Trägheit des sich bewegenden Insassen stammen kann.

Nachfolgend werden verschiedene Ausführungsformen der Erfindung näher beschrieben.

Nach einer bevorzugten Ausführungsform ist als Mittel zur gezielten Steuerung mindestens ein zwischen dem ersten und dem weiteren Bereich angeordnetes Ventil vorgesehen. Dieses Ventil stellt sicher, dass in gezielt-steuerbarer Weise Fluid in den ersten Bereich (Protektor) einströmen oder aus diesem herausströmen kann. In jedem Fall ist das erfindungsgemäße Ventil von einem einfachen fluidischen Durchgang, der in der Literatur bisweilen ungenauerweise auch als "Ventil" bezeichnet wird, zu unterscheiden, da ein solcher Durchgang gerade keine gezielte Steuerung des Fluidflusses erlaubt.

Das Ventil kann als ein Überdruck-Ventil oder ein steuerbares Ventil ausgestaltet sein.

Ein Überdruck-Ventil stellt auf einfache Weise sicher, dass erst ab einem bestimmten Druck ein Fluidfluss stattfinden kann. Dieser Auslösedruck kann im Voraus dauerhaft, oder mittels "intelligenter" Steuerung ad hoc festlegbar sein. Auch ein einfacher dichtender Verschluss, der bei einem bestimmten Druck bricht und dadurch öffnet, fällt hierunter.

Das Ventil kann auch elektrisch steuerbar sein, also mittels einer separaten Steuerungseinheit geschlossen und zum geeigneten Zeitpunkt geöffnet werden. Der Vorteil liegt in der größeren Flexibilität im Falle eines Aufpralls, da Zeitpunkt und - bei Vorliegen mehrerer Ventile - noch gezielter nur das Ventil geöffnet werden kann, welches zu einem verbesserten Unfallschutz beiträgt.

Nach einer anderen Ausführungsform umfasst der Sitz als weiteres Mittel zur Förderung (weiterer Druckgenerator) und/oder als Mittel zur gezielten Steuerung (Controller) eine zur zusätzlichen Förderung von Fluid in den ersten aufblasbaren Bereich (Protektor) eingerichtete Pumpe oder eine Druckgas-Kartusche. Die Pumpe oder Druckgas-Kartusche stellt demnach ein ergänzendes "aktives" Mittel dar, im Gegensatz zur weiter oben beschriebenen rein "passiven" Grund-Ausführungsform. Die Pumpe oder Druckgas-Kartusche ist bevorzugt durch ein Mittel zur Detektion eines Aufpralls (Auslöser, Sensor) aktivierbar, so dass ein aktiv unterstützter Fluidfluss in den ersten Bereich (Protektor) erreichbar ist.

Hier übernimmt demnach die Pumpe oder Druckgas-Kartusche vorzugsweise sowohl die Funktion der ergänzenden Fluidförderung (weiterer Druckgenerator), als auch der gezielten Steuerung (Controller). Ist die Pumpe abgeschaltet bzw. die Druckgas-Kartusche geschlossen, wird kein Fluid gefördert; ist sie eingeschaltet bzw. offen, fördert sie Fluid, der Innendruck des Bereiches, mit welchem sie fluidisch verbunden ist, erhöht sich weiter.

Es ist klar, dass als zusätzliche "Controller" steuerbare Ventile vorhanden sein können (bzw. der Controller solche Ventile umfasst), welche insbesondere bei Vorhandensein mehrerer Protektoren weiterhin dafür sorgen, dass gezielt nur diejenigen mit druckerhöhendem Fluid versorgt werden, welche einen Beitrag zum Unfallschutz in einer konkreten Gefahrensituation leisten (andernfalls sind auch mehrere Pumpen denkbar). Insofern umfasst die Pumpe als Mittel zur Steuerung auch besagte Ventile. Diese müssen nicht als Überdruck-Ventile ausgeführt sein, sondern sie können auch als elektrisch steuerbare Ventile ausgestaltet sein.

Optional ist die Innenkontur des weiteren Bereichs eingerichtet, bei Erhöhung des Innendrucks eine Verringerung des Abstands zwischen ihr und dem Insassen zu bewirken. Details zu dieser Ausführungsform folgen an späterer Stelle.

Nach einer Ausführungsform wird das Fluid (in diesem Falle Gas in Form von Luft) mittels der Pumpe aus der Umgebung des Sitzes gefördert. Hierbei ist sicherzustellen, dass eine ausreichende Luftzufuhr möglich ist. Der Vorteil ist, dass die Änderung des Drucks in einem Bereich unabhängig vom Druck der anderen Bereiche bleibt.

Nach einer anderen Ausführungsform wird das Fluid aus einem der weiteren Bereiche gefördert, das System ist also geschlossen, und eine Druckerhöhung in einem Bereich geht mit einer Druckverringerung in einem anderen Bereich einher. Ein versehentliches Versperren einer Luftzufuhr ist nicht möglich. Zudem kann das Fluid ein anderes Gas als Luft, oder eine Flüssigkeit sein.

Nach einer weiteren Ausführungsform wird das Fluid aus einem Reservoir gefördert. Auch hier liegt ein geschlossenes System vor; zugleich beeinflusst die Druckänderung eines Bereiches nicht den Druck anderer Bereiche.

Nach einer bevorzugten Ausführungsform umfasst der Sitz eine Basis, eine Rückenlehne, zwei Seitenteile, ein Kopfteil, und einen zum Zurückhalten eines Insassen am Sitz geeigneten Gurt. Die Basis ist dafür vorgesehen, das Gesäß des Insassen aufzunehmen; die Seitenteile befinden sich rechts und links des Insassen, und die Rückenlehne ist hinter dem Insassen angeordnet. Das Kopfteil befindet sich in Kopfhöhe des Insassen. Der Gurt kann ein- oder mehrteilig sein und ist lösbar mit dem übrigen Sitz, vorzugsweise mit der Basis, verbunden.

Mindestens eine dieser Komponenten, vorzugsweise mindestens zwei, aber auch alle, können mit einem oder mehreren aufblasbaren Bereichen (Protektoren und passiven Druckgeneratoren) versehen sein, welche sich besonders bevorzugt in Richtung des Insassen erstrecken, oder die Komponenten bestehen selber aus aufblasbaren Bereichen. Beispielsweise kann die Basis eine steife Platte umfassen, auf welcher der aufblasbare Bereich, der dann als "Basisbereich" bezeichnet werden kann, angeordnet, und mit welchem er fest verbunden ist, oder die Basis ist vollständig als aufblasbarer Bereich ausgestaltet.

Anders ausgedrückt, die Seitenteile oder auch jede der anderen Komponenten können mehrteilig ausgestaltet sein, also mehrere aufblasbare Bereiche umfassen, die fluidisch zusammenhängend oder auch separat sein können. Beispielsweise kann ein Seitenteil aus einem im Schulterbereich, und einem weiteren, im Lendenbereich angeordneten aufblasbaren Bereich umfassen. Dabei kann der Schulterbereich ein fluidischer Bereich sein, und der Lendenbereich zwei fluidfisch zusammenhängende Bereiche aufweisen, etc.

Nach einer Ausführungsform, nach welcher der Sitz Seitenteile umfasst, sind die Innenkonturen von an den Seitenteilen angeordneten Seitenbereichen so ausgestaltet, dass sie durch Erhöhung ihres Innendruckes einander annäherbar sind. Das bedeutet, dass sich die Innenkonturen bei einer Druckerhöhung aufeinander zu bewegen, so dass sich der Zwischenraum von Insasse und Innenkontur so lange verringert, bis Letztere am Insassen anliegen. Eine weitere Druckerhöhung resultiert dann in einer zunehmenden Erhöhung des Anpressdruckes der Innenkonturen auf den Insassen.

Besonders bevorzugt ist (in der Situation eines durch den Aufprall aktivierten Systems) der Abstand zwischen distalen Abschnitten der Innenkonturen der Seitenteile kleiner als der Abstand zwischen proximaleren Abschnitten dieser Innenkonturen. Auf diese Weise formen die Seitenteile "Klammern" oder (teil-)geschlossene "Arme", welche im Bereich seitlich des Körpers eng anliegen, aber sich auch im Bereich vor dem Körper schützend vor diesen schieben, so dass ein optimaler "Rundum-Schutz" gewährleistet ist.

Somit bewegen sich die beiden Innenkonturen der Seitenteile auf den Insassen zu und schützen diesen, wohingegen im normalen Gebrauch ein ausreichende Bewegungsfreiheit gewährender Abstand zwischen Innenkonturen und Insasse besteht. Dies ist eine besonders vorteilhafte Ausgestaltung der Seitenbereiche, mittels welcher ein besonders hoher Schutz des Insassen gewährleistet werden kann.

Nach einer Ausführungsform, bei welcher der Sitz eine Rückenlehne aufweist, umfasst diese einen aufblasbaren Bereich ("Rückenbereich"), welcher eine änderbare und/oder zur Aufnahme von Druck eingerichtete Innenkontur umfasst, und als Protektor dienen kann. Er ist vorzugsweise dem Insassen zugewandt. Nach einer bevorzugten Ausführungsform ist der Rückenbereich fluidisch mit dem Basisbereich verbunden, so dass im Falle einer Kollision der Rückenbereich vom Basisbereich unter Druck gesetzt wird und sich dem Insassen annähert.

Nach einer anderen Ausführungsform kann der Rückenbereich selber als Lieferant für einen Überdruck dienen (Druckgenerator); das bedeutet, dass (beispielsweise im Falle einer Kollision durch ein nachfolgendes Fahrzeug) der (mechanische) Druck auf den, und somit der fluidische Druck im, Rückenbereich erhöht wird, was (aufgrund der Weiterleitung dieses Druckes) zu einer Verringerung des Abstandes der übrigen Innenkonturen (Seitenbereiche, optional Basisbereich) vom Insassen führt.

Es sind auch beide letztgenannten Ausführungsformen miteinander kombinierbar, indem entsprechende Ventile vorgesehen werden, die je nach Art des Aufpralls entsprechend öffnen oder schließen, so dass sich die erwünschte Druckerhöhung und -weiterleitung in der erfindungsgemäß gezielten Weise ergibt.

Nach einer weiteren Ausführungsform ist ein Gurt vorhanden; dieser umfasst mindestens einen aufblasbaren Gurtbereich mit einer änderbaren und/oder zur Aufnahme von Druck eingerichteten Innenkontur, oder er besteht aus einem solchen Bereich. Der Gurtbereich kann in der vorbeschriebenen Weise fluidisch mit einem der anderen Bereiche, vorzugsweise mindestens dem Basis- oder Rückenbereich, oder mit einer Pumpe verbunden sein. Der Vorteil eines solchen Gurtbereiches liegt darin, dass die Sicherheit aufgrund der beim Unfall eng anliegenden Komponenten weiter erhöht wird, da eine weitere derartige Komponente hinzukommt.

Nach einer anderen Ausführungsform ist die Rückenlehne in ein unteres Rumpfteil und ein oberes Kopfteil unterteilt. Die beiden Teile befinden sich demnach hinter dem Rumpf bzw. dem Kopf des Insassen. Auf diese Weise können mehr Innenkonturen bereitgestellt werden, welche sich bei einem Unfall in einer besser optimierbaren Weise an den Körper eines Insassen annähern. Zudem kann weiteres Gewicht eingespart werden, wenn Rumpf- und Kopfteil voneinander beabstandet sind. Es ist klar, dass die Beabstandung nicht zu groß sein darf, um die Sicherheit des Sitzes nicht zu reduzieren.

Nach einer bevorzugten Ausführungsform ist der Sitz als ein am Sitz eines Fahrzeugs anbringbarer Kindersitz ausgestaltet. Das bedeutet, dass der Sitz alle der vorstehenden Ausführungsformen umfasst, jedoch nicht im Wesentlichen dauerhaft fest mit dem Fahrzeug verbunden, sondern lediglich lösbar an einem Sitz des Fahrzeugs anbringbar ist. Viele der vorstehend beschriebenen Vorteile (geringes Gewicht, geringer Platzbedarf) spielen insbesondere im Hinblick auf abnehmbare Kindersitze eine besonders wichtige Rolle. Einige der nachfolgenden Erläuterungen beziehen sich daher auch insbesondere auf derartige abnehmbare Kindersitze.

Nach einer bevorzugten Ausführungsform weist die Rückenlehne eine mittig angeordnete Versteifung zur weiteren Verbesserung der strukturellen Stabilität und/oder ggf. zur vereinfachten Befestigbarkeit am Sitz des Transportmittels auf. Die Versteifung kann vorzugsweise aus einem formstabilen, schlagfesten Kunststoff bestehen. An ihr stützt sich der übrige, insbesondere der aufblasbare Teil der Rückenlehne (Rückenbereich) ab. Durch Befestigen des in Fahrzeugen typischerweise vorhandenen Sicherheitsgurtes an der Versteifung ist eine einfache und sichere Befestigungsmöglichkeit bereitgestellt, die Fehlbedienungen beim Anbringen am Sitz des Transportmittels vermeiden hilft. Die Versteifung erstreckt sich im Wesentlichen über die gesamte Höhe des Sitzes, und über ca. 5% bis 30% der Breite desselben. Somit weist sie auch in einem ggf. ungefalteten Zustand eine geringe Größe auf, die ein Verstauen des (abnehmbaren und entlüfteten) Sitzes wie insbesondere Kindersitzes vereinfacht.

Die Versteifung dient ferner auch zum Schutz des Rückgrats eines im Sitz wie insbesondere Kindersitz befindlichen Insassen wie insbesondere eines Kindes bei einem Unfall. Insbesondere das Rückgrat bedarf bei einem Unfall besonderen Schutzes, da Verletzungen desselben besonders gravierend und kaum heilbar sind. Die Versteifung erstreckt sich demnach in etwa von der Oberseite der Basis bis zur Oberkante der Rückenlehne, und weist eine Breite auf, die mindestens der typischen Breite der Wirbelsäule des Insassen entspricht. Eine Breite von 5 bis 10 cm ist vorteilhaft. Es ist auch möglich, dass die Versteifung eine variable Breite aufweist; beispielsweise kann sie im Lendenbereich schmaler als im Nackenbereich sein.

Anstelle einer einteiligen Versteifung kann diese auch mehrteilig sein; die einzelnen Teile sind dann vorzugsweise symmetrisch zur Sagittalebene des Sitzes angeordnet.

Nach einer Ausführungsform ist die Versteifung aus Kunststoff hergestellt oder umfasst dieses Material. Es ist klar, dass der Kunststoff bevorzugt eine hohe Schlagfestigkeit aufweisen muss, um der Schutzfunktion gerecht zu werden.

Nach einer weitere Ausführungsform ist die Versteifung aus Holz wie insbesondere aus Bambus hergestellt oder umfasst dieses Material. Tatsächlich weist Bambus sehr vorteilhafte Eigenschaften hinsichtlich der mechanischen Beständigkeit, der Kosten, des Gewichts und nicht zuletzt auch der Recyclingfähigkeit auf. Somit eignet sich ein Kindersitz mit einer Versteifung, aber auch mit anderen, eine gewisse Steifigkeit benötigenden Komponenten (z.B. Basis) insbesondere für ärmere Regionen der Welt, in denen so auf lokal vorhandene Ressourcen zurückgegriffen werden kann.

Nach einer bevorzugten Ausführungsform ist die vorstehend genannte Versteifung faltbar, um den Platzbedarf des Kindersitzes während des Nichtgebrauches zu verringern. Hierzu kann die Versteifung ein oder mehrere Klappgelenke aufweisen, so dass sie in der Sagittalebene oder der Frontalebene klappbar ist. Es ist klar, dass der entsprechende Mechanismus so beschaffen sein muss, dass im Gebrauchszustand die Stabilität der Versteifung auch sichergestellt ist, beispielsweise mittels entsprechender Verriegelungen.

Nach einer alternativen Ausführungsform ist die Versteifung zusammenschiebbar; das bedeutet, dass sie nach Art eines Teleskopstabes aus mehreren Segmenten besteht, die ineinander geschoben werden können, um die Gesamtlänge auf die Länge eines Segmentes zu bringen.

Beide Ausführungsformen sind auch kombinierbar; so kann die Versteifung ineinander schiebbar sein, und an ihrem untenliegenden Ende ein Drehgelenk aufweisen, so dass sie auf die Basis vorklappbar ist.

Bevorzugt ist der abnehmbare Kindersitz so auf die Größe eines Handgepäckstückes verkleinerbar. Die Maße eines solchen Handgepäckstückes sollen nach den Regeln der IATA in der Summe nicht mehr als 115 cm betragen. Vorzugsweise ist der gefaltete Kindersitz dann nicht größer als z.B. 55 cm x 35 cm x 20 cm. Auf diese Weise lässt er sich in der Überkopf-Handgepäckablage eines Flugzeugs verstauen, was einen Vorteil gegenüber anderen, überhaupt nicht oder nicht entsprechend klein faltbaren Kindersitzen darstellt.

Nach einer weiteren Ausführungsform ist die Rückenlehne, und sofern vorhanden, der aufblasbare Rückenbereich, und/oder ein ggf. mehrteiliges Seitenteil jeweils in einer Richtung, die parallel zu seiner dem Insassen zugewandten Seite verläuft, verlängerbar. Das bedeutet, dass die Rückenlehne bzw. der Rückenbereich, oder das Seitenteil in Gebrauchsstellung "nach oben", also von der Basis weg, verlängerbar ist. Auf diese Weise ist der Kindersitz besser an unterschiedliche Rumpflängen anpassbar, so dass unabhängig von der Körpergröße des Kindes Insassen immer ein bestmöglicher Schutz bereitgestellt werden kann.

Insbesondere bei einer zweiteiligen Ausführung der Rückenlehne und/oder des Seitenteils kann die Verlängerung durch Änderung des in vertikaler Richtung gemessenen Abstandes zwischen Rumpf- und Kopfteil erreicht werden. Auch die in der Rückenlehne befindliche Versteifung ist dann, sofern vorhanden, verlängerbar; dies kann durch denselben Mechanismus erreichbar sein, der auch ein Ineinanderschieben ermöglicht.

Die Seitenteile und/oder die Rückenlehne können bzw. kann auch durch Vorsehen einer separaten Zwischenkammer, welche für die Bereitstellung der Gesamthöhe des jeweiligen Seitenteils bzw. der Rückenlehne zuständig ist, erreicht werden. Auch durch ein zusätzliches Aufblasen eines einteiligen Seitenteils bzw. der Rückenlehne kann dieses bzw. diese, eine geeignete Konstruktion vorausgesetzt, in der Länge variierbar ausgestaltet sein ("Ziehharmonika-Konstruktion", Faltenbalg) .

Der Sitz kann noch weitere Merkmale aufweisen, welche die Sicherheit, Bequemlichkeit und/oder Handhabbarkeit verbessern.

Der Sitz kann Kühlkanäle zur Luftzirkulation in der Rückenlehne und/oder den Seitenteilen und/oder der Basis und/oder dem Kopfteil und/oder dem Gurt aufweisen. Mittels eines optionalen Gebläses kann Frischluft aktiv durch die Kühlkanäle transportiert werden, und so den Sitz noch stärker kühlen, was insbesondere in warmen Ländern von Vorteil ist, da herkömmliche Sitze wie insbesondere abnehmbare Kindersitze in solchen Regionen meist zu einem unangenehmen Temperaturanstieg in den Kontaktbereichen zwischen Sitz und Insassen führen.

Der Sitz kann eine zusätzliche Kammer, enthaltend ein durch entsprechende Kanäle innerhalb der aufblasbaren Bereiche zirkulierbares, festes oder gasförmiges Kühlmittel aufweisen. Somit ist ein noch besserer Kühleffekt erzielbar. Optional ist das Kühlmittel, beispielsweise durch Austausch der Kammer, ersetzbar.

Der Sitz kann einen Tragegriff am distalen Ende der Rückenlehne aufweisen, der vorzugsweise versenkbar ist. Am Tragegriff kann der Sitz besonders einfach angehoben, positioniert oder fortgetragen werden.

Der dann abnehmbare Sitz kann außerdem einen zum Zusammenwirken mit einem standardisierten Befestigungsmittel (z.B. nach ISO 13216) eingerichteten Fixierbereich an einer Unterseite der Basis aufweisen. Vorzugsweise ist dieser Fixierbereich in die Basis einziehbar, um bei Nichtverwendung nicht zu stören.

Der Sitz kann eine Kontrolleinheit, eingerichtet zur Überwachung (Messen, Anzeigen, Abspeichern, Senden) von Innenddruck und/oder Beschleunigung und/oder bestimmungsgemäßem Gebrauch des Sitzes aufweisen. Die Messung und Anzeige dient der unmittelbaren Kontrolle, das Abspeichern der späteren Protokollierung, und das Senden beispielsweise der Kontrolle durch Fahrzeuginhaber, die das Fahrzeug nicht immer selber fahren (z.B., wenn eine Betreuungsperson ein Kind fährt). Die Kontrolleinheit kann, vorzugsweise mittels des Bluetooth-Protokolls, drahtlos an ein Smartphone oder das Entertainment-System eines Fahrzeugs angekoppelt werden, um besagte Daten darüber sichtbar zu machen. Es sei angemerkt, dass die Kontrolleinheit nicht mit dem eingangs genannten und immer vorhandenen "Controller" gleichzusetzen ist; dieser meint die generische Möglichkeit der gezielten Steuerbarkeit des Fluidstroms, wohingegen die "Kontrolleinheit" eine elektronische Vorrichtung meint, welche neben dem (optionalen) Steuern auch weitere Funktionen und Komponenten (insbesondere den Auslöser, aber auch den Druckgenerator, s.u.) umfassen kann.

Andere Ausführungsformen, die insbesondere im Hinblick auf einen abnehmbaren Kindersitz von Vorteil sind, weisen eine manuell bedienbare Handpumpe, und/oder einen Anschluss für eine Druckluftquelle auf. Die Druckluft kann auch z.B. von einem externen Kompressor oder einem Druckgefäß, wie sie häufig an Tankstellen bereitstehen, zur Verfügung gestellt werden. Auch das Mitführen einer kleinen Druckluftkartusche ist möglich.

Nach einer weiteren Ausführungsform sind einige oder alle aufblasbaren Bereiche zusätzlich mit mindestens einer Druckluft-Kartusche verbunden oder verbindbar, welche im Falle eines Unfalls automatisiert auslöst und den Druck im Inneren der Bereiche schlagartig nach Art eines Airbags weiter erhöht. Der Vorteil dieser Ausführungsform ist die noch schnellere Reaktionsgeschwindigkeit des Sitzes im Ernstfall, und der u.U. höhere Druck, der durch die Kartusche bereitstellbar ist. Dies ist insbesondere bei besonders leichtgewichtigen Insassen vorteilhaft, da diese ansonsten möglicherweise einen nicht ausreichend hohen Druck z.B. im Basisbereich erzeugen können. Die Druckluft-Kartusche kann auch die o.g. Pumpe ersetzen oder ergänzen. Es ist klar, dass die Kartusche dann auch mit einer geeigneten Steuerung verbunden oder eine solche umfassen muss, um auch als Controller eingesetzt werden zu können.

Nach einer weiteren Ausführungsform ist die Kontrolleinheit mit mindestens einer Pumpe / Kartusche, oder mit einer Mehrzahl von den Fluidfluss vom ersten Bereich (Protektor) zu den weiteren Bereichen (Druckgeneratoren) steuernden Ventilen verbunden, so dass im Falle eines Aufpralls der Fluidstrom in diese oder zwischen diesen Bereichen gezielt steuerbar ist. Demnach ist die Kontrolleinheit in der Lage, bei Detektion eines Aufpralls den Druck gezielt in bestimmten Bereichen zu erhöhen, bzw. den Fluidfluss zwischen bestimmten Bereichen gezielt zu steuern, um so die weiter oben beschriebene optimale Ausnutzung des zur Verfügung stehenden Druckes bzw. Fluidvolumens zu erreichen.

Bei allen beschriebenen Ausführungsformen ist zu beachten, dass das zum Verständnis der Erfindung mit "erstem" bzw. "weiterem" Bereich bezeichnete Merkmal tatsächlich durch ein- und dieselbe Komponente bereitgestellt sein kann. Je nach konkreter Aufprallsituation kann also eine konkrete Komponente als Druckgenerator oder als Protektor dienen. Die jeweilige Funktion ergibt sich in Abhängigkeit der jeweiligen Erfordernisse.

So können im Falle eines Heckaufpralls der Rückenbereich und der Sitzbereich als Druckgenerator(en), und die beiden Seitenbereiche als Protektoren dienen. Im Falle eines Seitenaufpralls kann hingegen derjenige Seitenbereich, welcher der Aufprallseite zugewandt ist, einen Teil des Stoßes durch gesteuerte Reduktion seines (aufgrund des Aufpralls zunächst erhöhten) Innendruckes ableiten. Dabei dient er zugleich als Druckgenerator, indem das unter erhöhtem Druck stehende Volumen, welches zur Dissipation der Stoßenergie schnell abzuführen ist, nicht in die Umgebung, sondern beispielsweise auf den gegenüberliegenden Protektor, oder z.B. den Gurtbereich, geleitet wird.Im Falle eines Seitenaufpralls, und bei Vorhandensein eines Seitenteils mit mehreren aufblasbaren Bereichen, kann das Becken einer Person den untenliegenden ersten Bereich unter erhöhten Druck setzen, der somit als Druckgenerator dient. Der Luftstrom wird nach oben in die im Kopfbereich angeordneten Protektoren geleitet, und zwar insbesondere auf den der Aufprallseite zugewandten Protektor. Dieser vergrößert sich und verringert die Bewegung des besonders empfindlichen Kopfes des Insassen. Besonders bevorzugt erfolgt dann zeitverzögert ein Ablassen oder Umleiten eines Teils des Volumens dieses Protektors, wodurch die Stoßenergie dissipiert wird. Hierzu kann die Steuereinrichtung vorteilhaft eingesetzt werden, die zu bestimmten Zeitpunkten die entsprechenden Ventile öffnet und schließt.

Die Erfindung betrifft auch ein Verfahren zum Schutz eines in einem Sitz befindlichen Insassen. Das Verfahren bezieht sich sowohl auf den Schutz einer in einem normalen Fahrzeugsitz befindlichen erwachsenen Person als auch auf den Schutz eines in einem abnehmbaren Kindersitz befindlichen Kind.

Der Sitz weist mindestens einen Protektor in Form eines ersten aufblasbaren Bereichs auf, wobei eine dem Insassen zugewandte Innenkontur dieses Bereichs zur Aufnahme von Druck eingerichtet und/oder mittels Fluidflusses in besagten Bereich änderbar ist. Das Verfahren ist dadurch gekennzeichnet, dass im Falle eines Aufpralls durch einen von einem Auslöser aktivierten Druckgenerator in Form eines Mittels zur Förderung von Fluid unter gezielter Steuerung Fluid in besagten Bereich (Protektor) gefördert wird, so dass durch gezielte Aufnahme von Druck und/oder gezieltes Ändern der Innenkontur dieses ersten Bereichs durch diesen ein verbesserter Unfallschutz für den Insassen bereitgestellt wird. Zur Vermeidung von Wiederholungen wird auf die obenstehenden Erläuterungen verwiesen.

Beim normalen Gebrauch, d.h. während normaler Fortbewegung des Transportmittels, ist der Druck innerhalb des Protektors (d.h. des mindestens einen aufblasbaren Bereichs) im Vergleich zu einem Maximalwert reduziert und entspricht einem ersten Druckwert (beispielsweise einem Wert von 0,25 bar Überdruck).

Im Falle eines Aufpralls erfährt das Transportmittel eine plötzliche, sehr starke Verzögerung. Diese wird auf verschiedene Weise detektiert und löst einen Fluidfluss in diesen mindestens einen Bereich (Protektor) aus, so dass sich dieser verfestigt und/oder vergrößert, und so den Unfallschutz des Insassen erhöht. Der zu diesem Zeitpunkt herrschende Überdruck kann beispielsweise 0,5 bar, 0,75 bar, 1,0 bar oder mehr betragen.

Erfindungsgemäß ist als Druckgenerator (Mittel zur Förderung) mindestens ein weiterer aufblasbarer Bereich mit einer zur Aufnahme von äußerem Druck eingerichteten Innen- oder Außenkontur vorgesehen, wobei der erste und der weitere Bereich fluidisch miteinander verbunden sind. Erfindungsgemäß wird bei einer Erhöhung des Druckes in dem weiteren Bereich (Druckgenerator) oberhalb eines vorbestimmbaren Wertes ein passiver, druckgetriebener Fluidfluss von diesem zu dem ersten Bereich (Protektor) erreicht. Ein Fluidfluss in entgegengesetzter Richtung wird hingegen von dem zwischen dem ersten und dem weiteren Bereich angeordneten Mittel zur Steuerung (Controller) unterbunden. Auch hier wird zur Vermeidung von Wiederholungen auf die obenstehenden Ausführungen verwiesen."Passiv angetrieben" meint hier, das kein kostensteigernder Antrieb mit Verzögerungssensor vorhanden sein muss, um die erwünschte Druckänderung zu erreichen; "druckgetrieben" bedeutet, dass keinerlei mechanische Bauteile notwendig sind, um die Formänderung zu erreichen, da der Druck durch den oder die weiteren Bereiche bereitgestellt wird.

Das Mittel zur Steuerung, mit welchem der o.g. vorbestimmbare Wert vorgegeben wird, kann z.B. mittels eines Überdruck-Ventils oder eines steuerbaren Ventils bereitgestellt sein. Auf die obenstehenden Erläuterungen zum Typ des Ventils wird ergänzend verwiesen.

Nach einer Ausführungsform wird die Druckerhöhung im weiteren Bereich (Druckgenerator) mittels des auf diesen aufgrund der Trägheit im Falle eines Aufpralls drückenden Insassen hervorgerufen.

Die Trägheit des beispielsweise mittels des Gurtes im Sitz gehaltenen Insassen bewegt diesen entgegen mindestens einem aufblasbaren Bereich, der dann als Druckgenerator dient; der Insasse "rutscht" in Richtung dieses Bereichs, wobei klar ist, dass die von diesem Bereich bereitgestellte Kontaktfläche zum Körper nicht vollkommen parallel zur Fahrrichtung verlaufen sollte, damit tatsächlich eine Bewegungskomponente auftritt, welche zu einem Anpressen des Bereichs durch den Körper des Insassen führt.

Aufgrund des Anpressens erhöht sich der Druck innerhalb des mindestens einen aufblasbaren Bereichs (Druckgenerators) auf einen zweiten Druckwert, resultierend in einem Fluidstrom vom dem nunmehr mit erhöhtem Druck beaufschlagten aufblasbaren Bereich zu mindestens einem anderen aufblasbaren Bereich hin (Protektor), beispielsweise zu den beiden Seitenbereichen. Der Fluidstrom erfolgt durch entsprechende Schläuche, Kanäle oder mit Hilfe kommunizierender Öffnungen der jeweiligen Bereiche, wobei in jedem Fall die erfindungsgemäßen Ventile (Controller) zwischengeschaltet sind.

Der mindestens eine weitere aufblasbare Bereich, und bevorzugt die Seitenbereiche, versucht bzw. versuchen aufgrund der Druckerhöhung, seine bzw. ihre Innenkontur(en) zu verändern, was zunächst (sofern der Abstand noch größer als Null ist) zu einer Annäherung an den Körper des Insassen, und anschließend zu einem Anstieg des von diesem anderen Bereich auf den Insassen ausgeübten Druckes führt. Die damit einhergehende Formänderung dieses mindestens einen anderen Bereichs (Protektors) führt zu einer verbesserten Sicherheit des Insassen im Sitz.

Nach einer Ausführungsform ist der mindestens eine druckbeaufschlagte Bereich der Basisbereich. Das bedeutet, dass der Insasse im Kollisionsfall in Richtung der Basis rutscht und mit dem Gesäß auf den Basisbereich drückt, so dass in diesem die erfindungsgemäße Druckerhöhung mit daraus resultierendem Fluidfluss stattfindet. Diese Ausführungsform kommt insbesondere bei Frontalaufprall des Transportmittels zum Einsatz.

Nach einer weiteren, mit der vorhergehenden kombinierbaren Ausführungsform ist der mindestens eine druckbeaufschlagte Bereich (Druckgenerator) der Rückenbereich. Demnach bewegen sich beim Aufprall Rücken des Insassen und Rückenbereich aufeinander zu, was ebenfalls zu einem Druckanstieg, nun jedoch im Rückenbereich, führt. Durch geeignet verbundene Ventile (Controller) wird der Überdruck dann beispielsweise in die Seitenbereiche (Protektoren) weitergeleitet. Diese Ausführungsform kommt insbesondere bei einem Heckaufprall des Transportmittels zum Einsatz, oder wenn der Sitz entgegen der Fahrtrichtung eingebaut ist.

Nach einer anderen Ausführungsform wird die Druckerhöhung im dann zu einer Außenkontur gehörenden weiteren Bereich mittels des auf diesen Bereich aufgrund der Trägheit im Falle eines Aufpralls drückenden Fahrzeugs (bzw. Komponenten desselben wie Sitz, Gurt, Türe, ...) hervorgerufen. Anders ausgedrückt, beim Aufprall wirken Druckkräfte zwischen der Außenkontur des Sitzes und dem Fahrzeug, welche auf den weiteren Bereich einwirken und dort zu einer Druckerhöhung führen. Diese wird dann, wie oben für eine Innenkontur beschrieben, an den oder die Protektoren weitergeleitet.

Nach einer anderen Ausführungsform ist als weiteres Mittel zur Förderung (weiterer Druckgenerator) und/oder als Mittel zur Steuerung (Controller) eine zur zusätzlichen Förderung von Fluid in den ersten aufblasbaren Bereich eingerichtete Pumpe oder eine Druckgas-Kartusche bereitgestellt, mittels welcher im Falle eines Aufpralls ergänzend ein aktiver Fluidfluss in den ersten Bereich (Protektor) erreicht wird. Auch hier wird zur Vermeidung von Wiederholungen auf die obenstehenden Ausführungen verwiesen. Im Gegensatz zur rein "passiven" GrundAusführungsform unterstützt hier die Pumpe die zum Unfallschutz benötigte Druckerhöhung bzw. den zu dieser führenden Fluidfluss; durch selektive Auswahl des richtigen aufblasbaren Bereichs mittels direkter Förderung in diesen hinein, bzw. unter Verwendung geeigneter Ventile, ist die erfindungsgemäß optimale Ausnutzung des innerhalb der sehr kurzen Zeitspanne zur Verfügung stehenden Fluidvolumens erreichbar.

Nach einer bevorzugten Ausführungsform nimmt beim normalen Gebrauch ein Abstand zwischen den Innenkonturen der aufblasbaren Seitenbereiche oder Kopfbereiche einen ersten Abstandswert ein. Dieser erste Abstandswert kann einige Zentimeter betragen, er kann aber auch Null sein, d.h. die Innenkonturen liegen gerade am Insassen an, ohne jedoch auf diesen Druck auszuüben. Somit hat der Insasse jederzeit eine ausreichende Bewegungsfreiheit und wird nicht durch einen zwar sicheren, aber zu eng anliegenden Sitz eingeengt, was insbesondere bei abnehmbaren Kindersitzen vorteilhaft ist.

Im Falle eines Unfalls versuchen aufgrund des gezielten Fluidstroms von dem mindestens einen druckbeaufschlagten Bereich, insbesondere dem Basis- und/oder Rückenbereich, zu den aufblasbaren Seitenbereichen, die Seitenbereiche, den Abstand zwischen ihren Innenkonturen zu verringern, und somit eine nunmehr auch "umarmungsgleiche" Schutzbewegung in Richtung des Insassen durchführen. Gleiches kann für die Innenkonturen des aufblasbaren Kopfbereichs des Kopfteils gelten.

"Umarmungsgleich" meint, dass die Formänderung der Innenkonturen der Seiten- und/oder Kopfbereiche vorzugsweise dergestalt ist, dass sie von einer "offenen" in eine schützende, eher "geschlossene" Geometrie übergehen, die den Insassen im Ernstfall auch an solchen Stellen schützt, die im normalen Gebrauch frei zugänglich bleiben (Gesicht, Hals, Brust, Bauch). Dadurch wird die Kontrolle über die Bewegung insbesondere des Brustbereiches, sowie der auf den Kopf des Insassen wirkenden Beschleunigungen signifikant verbessert, und die Sicherheit im Ernstfall deutlich erhöht. Auf die obenstehenden Erläuterungen hierzu wird ergänzend verwiesen.

Nach einer bevorzugten Ausführungsform umfasst der Sitz mindestens einen aufblasbaren Gurtbereich, welcher im Falle eines Unfalls ebenfalls mittels des gemäß vorstehend beschriebenen Mechanismus druckbeaufschlagt wird. Auf diese Weise wird die Sicherheit im Ernstfall weiter erhöht; zur Vermeidung von Wiederholungen wird wieder auf die obenstehenden Erläuterungen verwiesen.

Nach einer bevorzugten Ausführungsform dienen als Druckgeneratoren beide Seitenteile des Sitzes. Diese sind mittels der Ventile mit den beiden Seiten des Kopfteils fluidisch verbunden. Im Falle eines Aufpralls bewegt sich der Insasse zuerst mit dem Becken in Richtung des entsprechenden Seitenteils. Dort wird ein Druck aufgebaut, welcher dann - in Abhängigkeit von der Aufprallseite - in die entsprechende Seite des Kopfteils geleitet wird, was zu einer gezielten Vergrößerung dieses Kopfteils führt. Somit wird der vom Insassen erzeugte Überdruck in optimaler Weise genutzt, um die Sicherheit im Kopfbereich zu erhöhen. Vorzugsweise ist der Sitz so beschaffen, dass er im Bereich des Beckens jederzeit eng anliegt oder nur einen im Vergleich zum Kopfteil geringen Abstand vom Körper aufweist. Somit ist sichergestellt, dass im Beckenbereich zeitlich ausreichend vorgelagert ein Druck erzeugt wird, der dann noch vor, oder zumindest zu Beginn, des Aufpralls vom Kopf auf der entsprechenden Seite des Kopfteils zu einer Druckerhöhung in diesem führt. Vorzugsweise weist der Sitz vor oder hinter den aufblasbaren Bereichen der Seitenteile eine permanente Polsterung auf, so dass auch das Becken bei einem seitlichen Aufprall geschützt bleibt. Besonders bevorzugt kann nach einer vorherbestimmbaren Zeit der im Kopfteil vorhandene erhöhte Druck wieder verringert werden, um nach einer Verringerung des Abstandes und einem "Abfangen" des Kopfes diesen sanft abzubremsen und dessen Stoßenergie zu dissipieren.

Besonders bevorzugt erfolgt das vorstehend beschriebene Verfahren unter Verwendung eines Sitzes gemäß obenstehender Definition. Zur Vermeidung von Wiederholungen wird auf die entsprechende Beschreibung des erfindungsgemäßen Sitzes verwiesen.

### Figurenbeschreibung

Nachfolgend wird die Erfindung anhand von Figuren am Beispiel eines als abnehmbaren Kindersitz ausgestalteten Sitzes erläutert. Dabei zeigt
- **Figur 1**: eine Ausführungsform des erfindungsgemäßen Kindersitzes;
- **Figur 2**: den Kindersitz der Fig. 1 im Falle eines Aufpralls;
- **Figur 3**: eine schematische Rückansicht des Sitzes aus Fig. 1 und Fig. 2;
- **Figur 4**: die Ausführungsform des Kindersitzes der Fig. 3 in einer schematischen Seitenansicht;
- **Figur 5**: schematisch die Ausführungsform des zusammengefalteten Kindersitzes in einer Seitenansicht;
- **Figur 6 und 7**: ein Ablaufdiagramm mit einem "passiven" Mittel bzw. einem "aktiven" Mittel zur Förderung;
- **Figur 8 und 9**: eine Darstellung einer "aktiven" bzw. "passiven" Ausführungsform.

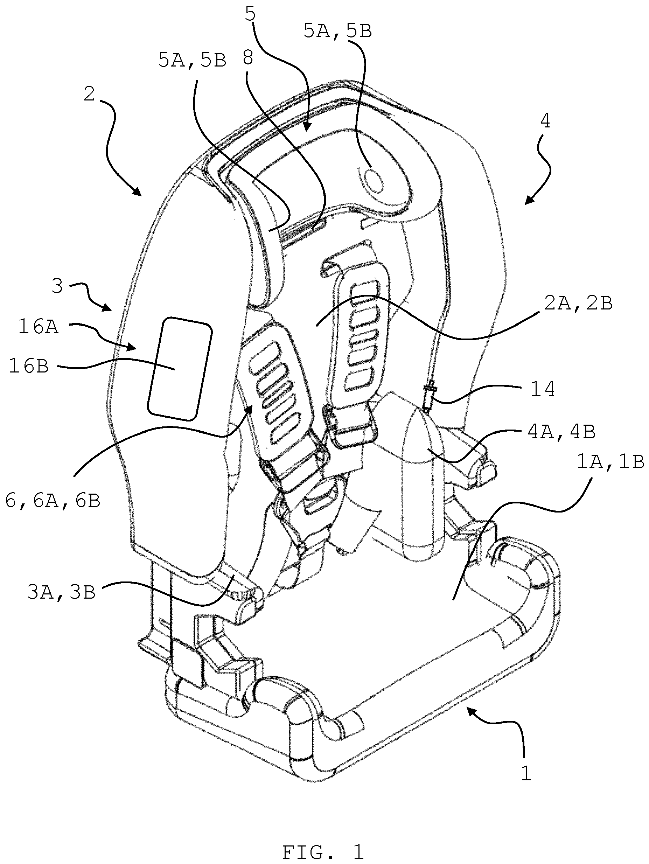

In der **Figur 1** ist eine schematische Vorderansicht einer Ausführungsform des Kindersitzes während des normalen Gebrauchs dargestellt.

Der Kindersitz umfasst eine Basis 1, eine Rückenlehne 2, zwei Seitenteile 3, 4, ein Kopfteil 5, und einen zum Zurückhalten eines Kindes (nicht dargestellt) am Kindersitz geeigneten Gurt 6, der vorliegend als Dreipunkt-Gurt ausgestaltet ist.

In der gezeigten Ausführungsform sind die Seitenteile 3, 4 mit der Rückenlehne 2 integriert ausgestaltet.

Das Kopfteil 5 weist an beiden Seiten als Protektor einen aufblasbaren Bereich 5A mit Innenkontur 5B auf. Es ist klar, dass diese Bereiche fluidisch verbunden oder getrennt sein können. Vorteilhafterweise sind sie getrennt, so dass in Abhängigkeit der Aufprallsituation nur die relevante Seite aufgeblasen wird. Beim normalen Gebrauch nimmt ein Abstand zwischen den Innenkonturen 5B der aufblasbaren Seitenbereiche 5A einen ersten Abstandswert ein, so dass das Kind eine ausreichende Bewegungsfreiheit hat. Gleiches gilt für die Seitenteile 3, 4.

Die Basis 1 umfasst einen aufblasbaren Basisbereich 1A mit einer Innenkontur 1B, der die Sitzfläche für das Kind bereitstellt und als Druckgenerator fungiert. Ebenso umfassen die Seitenteile 3, 4 aufblasbare Seitenbereiche 3A, 4A mit Innenkonturen 3B, 4B. Diese können im gezeigten Beispiel wahlweise als Protektoren oder als Druckgeneratoren verwendet werden.

Ferner umfasst der Kindersitz einen weiteren aufblasbaren Bereich 16A mit einer Außenkontur 16B, der vorliegend am Seitenteil 3 angeordnet ist. Die Außenkontur 16B kann ebenfalls mit Druck beaufschlagt werden, beispielsweise durch einen KFZ-Sicherheitsgurt, gegen den der Sitz im Falle eines Aufpralls gepresst wird.

Der dem Insassen zugewandte Teil der Rückenlehne 2 wird durch einen aufblasbaren Rückenbereich 2A mit Innenkontur 2B bereitgestellt.

Der Gurt 6 umfasst einen aufblasbaren Gurtbereich 6A mit Innenkontur 6B, der über nicht dargestellte fluidische Verbindungmittel mit Druck beaufschlagbar ist.

Außerdem sind Kühlkanäle 8 zur Luftzirkulation dargestellt.

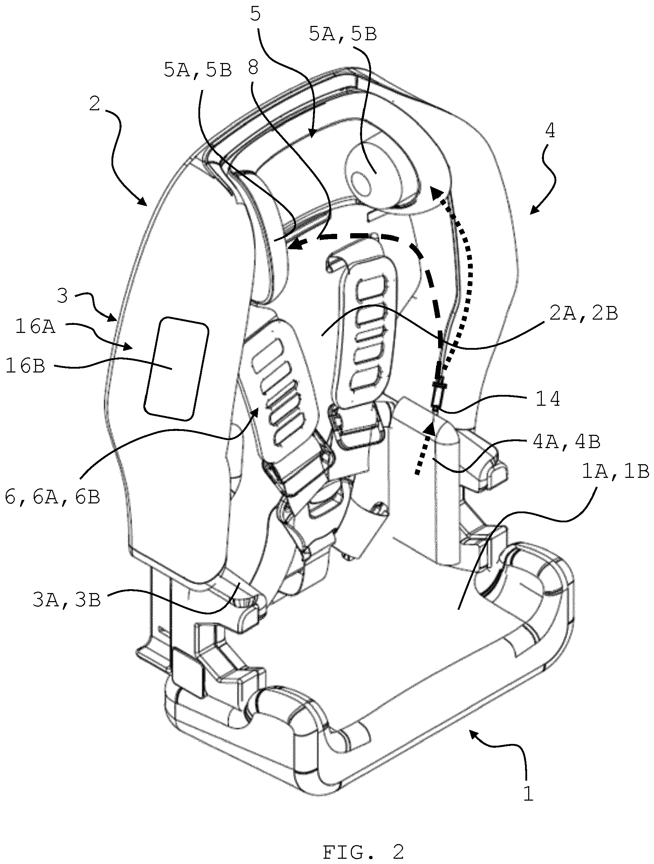

**Figur 2** zeigt den Kindersitz aus Fig. 1 im Falle einer seitlichen Kollision. Die Innenkontur 4B des als Druckgenerator fungierenden, aufblasbaren Seitenbereichs 4A ist aufgrund der Masseträgheit des Insassen (nicht gezeigt) komprimiert, so dass der Innendruck dort ansteigt. Über das sich gezielt öffnende Ventil 14 strömt das komprimierte Fluid (z.B. Luft) in Richtung des Kopfteils 5, angedeutet durch den punktierten bzw. gestrichelten Pfeil. Dieses Kopfteil 5 weist die vorzugsweise fluidisch getrennt aufblasbaren Bereiche 5A auf, welche vorliegend die Funktion von Protektoren haben, aber auch als Druckgeneratoren dienen können. Deren Innenkonturen 5B werden aufgrund des sich erhöhenden Innendruckes "aufgeblasen" und bewegen sich in Richtung des Kopfes des Kindes (nicht gezeigt). Aufgrund des Fluidstroms vom aufblasbaren Seitenbereich 4A zu den Kopfbereichen 5A versuchen diese, den Abstand zwischen ihren Innenkonturen 5B zu verringern, und führen somit eine umarmungsgleiche Schutzbewegung in Richtung des Kindes durch.

Es ist klar, dass die Steuerung auch so erfolgen kann, dass nur einer der beiden Kopfbereiche 5A mit Fluid beaufschlagt wird. Insbesondere ist der rechte Kopfbereich 5A mit dem auf dieser Seite angeordneten Seitenteil 4A über das Ventil 14 verbunden; gleiches gilt analog für die linke Seite. In diesem Fall bewegt sich auch nur diejenige Seite des Kopfteils 5 auf das Kind zu, auf welcher der Seitenaufprall stattfindet. Somit wird das zur Verfügung stehende Fluidvolumen bzw. die Druckerhöhung in optimaler Weise zur Verbesserung des Schutzes verwendet. Vorzugsweise arbeitet die Steuerung situationsabhängig, so dass für eine konkrete Situation auch ein optimaler Fluidpfad von der Steuerung vorgegeben wird.

Der erste aufblasbare Bereich (Protektor) ist in diesem Beispiel der Kopfbereich 5A mit Innenkontur 5B. Dessen Innendruck ist mittels Fluidzu- und -abflusses änderbar. Als Mittel zur Förderung von Fluid (Druckgenerator) in diesen Bereich dient der Seitenbereich 4A mit Innenkontur 4B. Das Mittel zur gezielten Steuerung des Fluidflusses (Controller) ist vorliegend das Ventil 14. Nicht gezeigt ist eine optionale Steuerungseinrichtung für das Ventil. Durch den gezielten Fluidzufluss ist ein verbesserter Unfallschutz durch den Bereich 5A für das Kind bereitstellbar. Als Mittel zur Förderung ist der weitere aufblasbare Bereich 4A vorgesehen, der die zur Aufnahme von äußerem Druck eingerichtete Innenkontur 4B umfasst. Beide Bereiche 4A, 5A sind fluidisch dergestalt miteinander verbunden, dass bei einer Erhöhung des Druckes auf den weiteren Bereich 4A ein passiver Fluidfluss von diesem zu dem ersten Bereich 5A erreichbar ist. Das Fluid wird vorliegend aus dem weiteren Bereich 4A gefördert. Es könnte, je nach Aufprallsituation, auch aus dem eine Außenkontur 16B aufweisenden weiteren Bereich 16A stammen.

Somit wird der für den Insassen zur Verfügung stehende Raum deutlich verringert, und die Person wird beim Aufprall besser im Sitz festgehalten. Zudem stellt der Kindersitz nunmehr vergrößerte "Polster" bereit, welche die Beschleunigung beim Abbremsen des Körpers deutlich mildern, und Verletzungen vorbeugen helfen. Dabei sind diese "Polster" besonders bevorzugt situationsabhängig und unter Verwendung der Steuerung nur genau dort vorhanden, wo sie den Schutz effektiv erhöhen helfen.

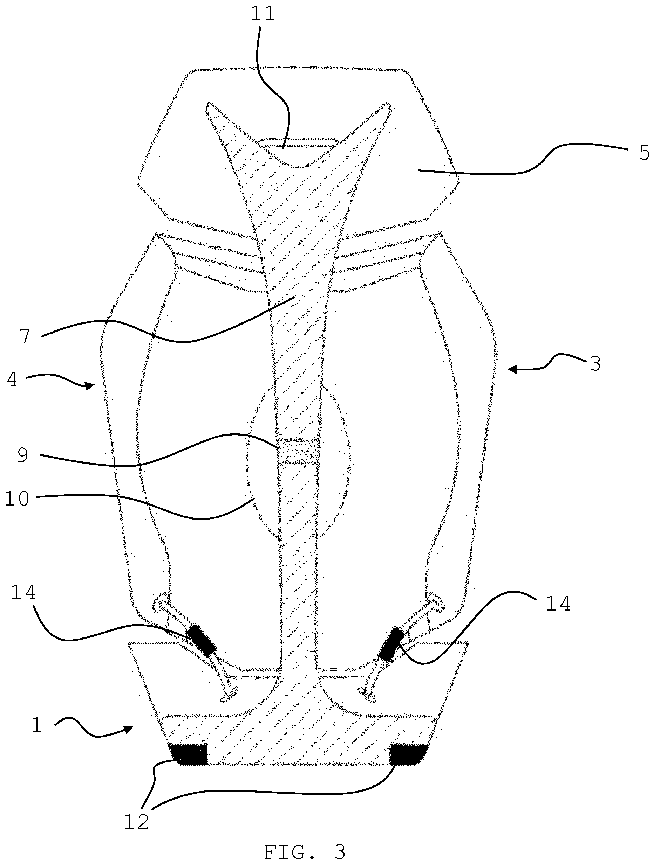

**Figur 3** zeigt eine schematische Rückansicht des Sitzes aus Fig. 1 und Fig. 2. Hier sind bereits eingeführte Bezugszeichen der Übersichtlichkeit halber teilweise fortgelassen. Erkennbar ist eine Versteifung 7, welche sich von der Basis 1 bis zum Kopfteil 5 erstreckt. Die Versteifung 7 dient der weiteren Verbesserung der strukturellen Stabilität. Sie ist vorliegend einteilig ausgestaltet. Ihre Breite ist deutlich geringer als die Breite der Rückenlehne 2 und beträgt nur ca. 20% derselben.

Erkennbar ist auch, dass sie sich nach oben hin verbreitert, und vorliegend ein Klappgelenk 9 aufweist. Die gestrichelte Linie in der Fig. 3 zeigt die mögliche Lage einer zusätzlichen Kammer 10 mit Kühlmittel, welches durch nicht dargestellte Kanäle im Inneren des Kindersitzes zirkulierbar ist.

Am distalen Ende der Rückenlehne 2 ist ein Tragegriff 11 zum einfachen Transport vorgesehen.

Ferner weist der Kindersitz einen zum Zusammenwirken mit einem standardisierten Befestigungsmittel eingerichteten Fixierbereich 12 an der Unterseite der Basis 1 auf. Vorliegend ist dieser zweigeteilt und zum Anbringen an eine nach ISO 13216 gestaltete Halterung ("ISOfix"^{®}) vorgesehen.

Zwischen den Seitenteilen 3, 4 und der Basis 1 sind exemplarisch Schlauchverbindungen mit Ventilen 14 zur fluidischen Verbindung eingezeichnet. Diese können als Überdruckventile ausgestaltet sein, oder über (nicht dargestellte) Steuerleitungen verfügen, über die sie mit einer Kontrolleinheit 13 (nicht gezeigt) verbunden sind.

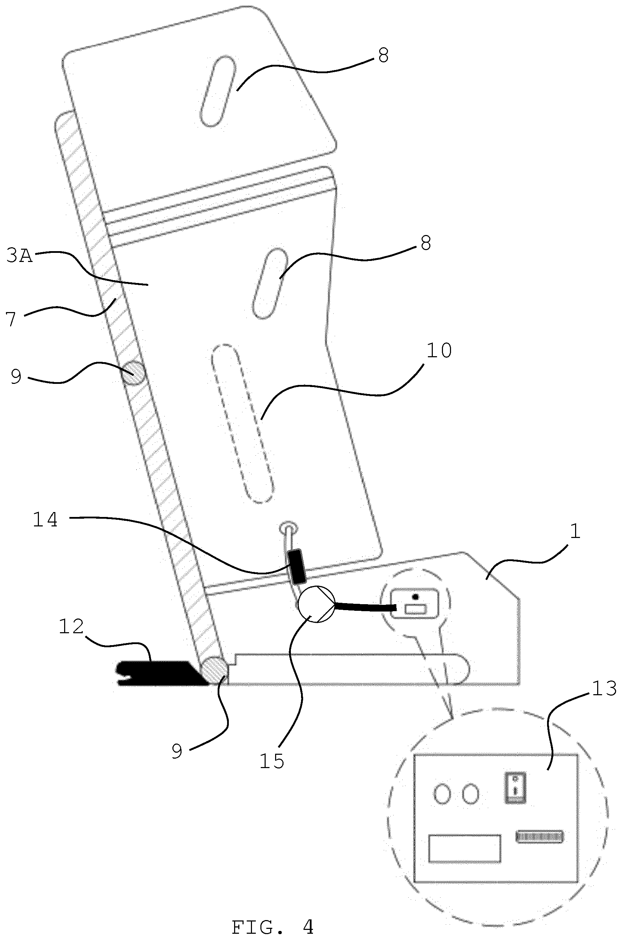

Die **Figur 4** zeigt die Ausführungsform des Kindersitzes der Figur 3 in einer schematischen Seitenansicht; die Bezugszeichen wurden wieder teilweise fortgelassen. Gut erkennbar sind zwei Klappgelenke 9 der Versteifung 7, der Fixierbereich 12, sowie weitere Kühlkanäle 8.

An der Seite der Basis 1 ist schematisch die Kontrolleinheit 13 dargestellt. Sie weist u.a. einen Schalter auf (ohne Bezugszeichen), mit dem eine integrierte Luftpumpe 15 ein- und ausgeschaltet werden kann. Diese Luftpumpe 15 kann ebenfalls als (ergänzendes) Mittel zur Förderung und als Mittel zur gezielten Steuerung gemäß obiger Definition verwendet werden. Mit dieser ist dann ein aktivunterstützender Fluidfluss in den oder die ersten Bereich(e) erreichbar. Angedeutet ist die elektrische Verbindung zwischen Pumpe 15 und Kontrolleinheit 13.

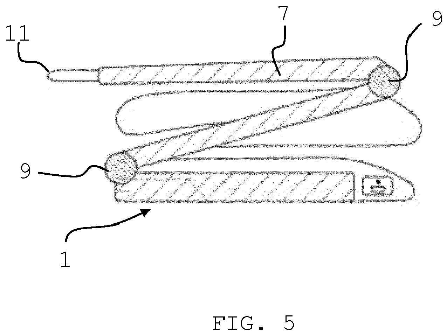

**Figur 5** schließlich zeigt schematisch die Ausführungsform des zusammengefalteten Kindersitzes in einer Seitenansicht. Die Versteifung 7 ist mittels der beiden Klappgelenke 9 in drei in etwa gleichlange Segmente gefaltet. Die Luft ist aus der Basis 1 und den übrigen Komponenten herausgelassen, so dass der Kindersitz sehr platzsparend zusammengelegt werden kann, beispielsweise auf ein Maß kleiner oder gleich einem handelsüblichen Handgepäckstück für Flugzeugkabinen. Der Tragegriff 11 kann nun zum bequemen Transportieren des gefalteten Kindersitzes verwendet werden.

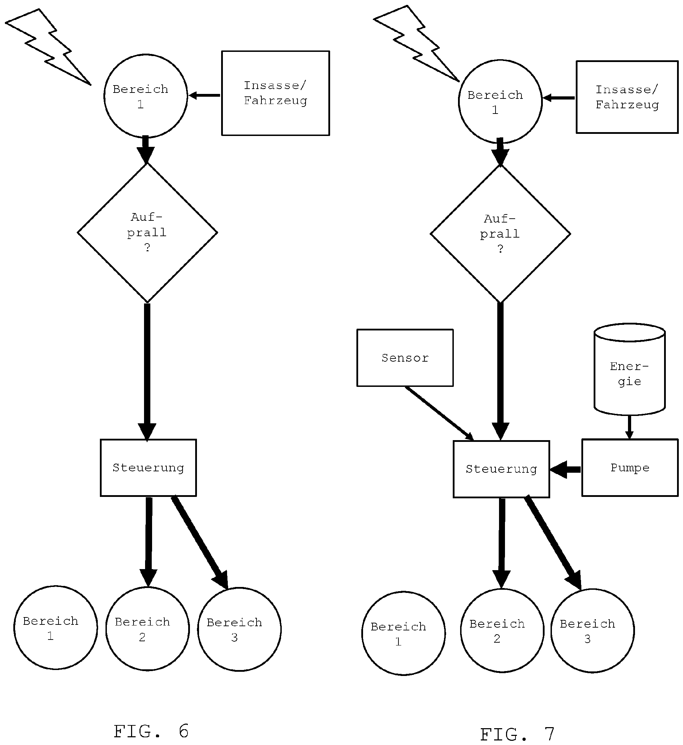

**Figur 6** zeigt ein Ablaufdiagramm im Falle des ausschließlichen Vorhandenseins eines "passiven" Mittels zur Förderung. Dieses wird durch den ersten Bereich (oben im Bild) bereitgestellt. Wird ein Aufprall, angedeutet durch das Blitz-Symbol, detektiert, beispielsweise durch Erhöhung des Innendruckes in diesem ersten Bereich, registriert dies die Steuerung, da in diesem Fall der Druck in der Leitung zwischen Bereich 1 und Steuerung steigt; ggf. kommt auch ein gewisser Fluidfluss zustande. Als Mittel zur Förderung von Fluid dient hierbei ebenfalls der erste Bereich, welcher vom Insassen oder von einer Komponente des Fahrzeugs komprimiert wird. Der erste Bereich erfüllt somit sowohl die Funktion des "Druckgenerators" als auch die Funktion eines "Sensors" und "Auslösers". Die Steuerung leitet nun in geeigneter Weise den vom ersten Bereich bereitgestellten Fluidfluss in den zweiten oder dritten Bereich um. Ist beispielsweise der erste Bereich ein Seitenbereich, so ist es sinnvoll, den Fluidfluss in die gegenüberliegende Seite und einen Kopfbereich zu leiten. In der Fig. ist unten im Bild der Bereich 1 nicht mit einem Fluidfluss ansteuerbar (angedeutet durch den fehlenden dicken Pfeil), da er ja bereits als Mittel zur Förderung dient.

Die **Figur 7** zeigt ein Ablaufdiagramm im Falle des zusätzlichen Vorhandenseins eines "aktiven" Mittels zur Förderung. Ein dünner Pfeil steht hierbei für einen Informations- oder Energiefluss, ein dicker Pfeil steht für eine Druckerhöhung und ggf. einen Fluidfluss.

Ein Sensor dient der Detektion und Meldung eines Aufpralls an die Steuerung. Die Steuerung steuert eine Pumpe an, welche mit elektrischer Energie versorgt wird und einen zusätzlichen Fluidfluss bereitstellt. Die Steuerung leitet diesen Fluidfluss je nach konkreter Situation in einen oder mehrere der aufblasbaren Bereiche weiter, angedeutet durch kreisförmige Konturen.

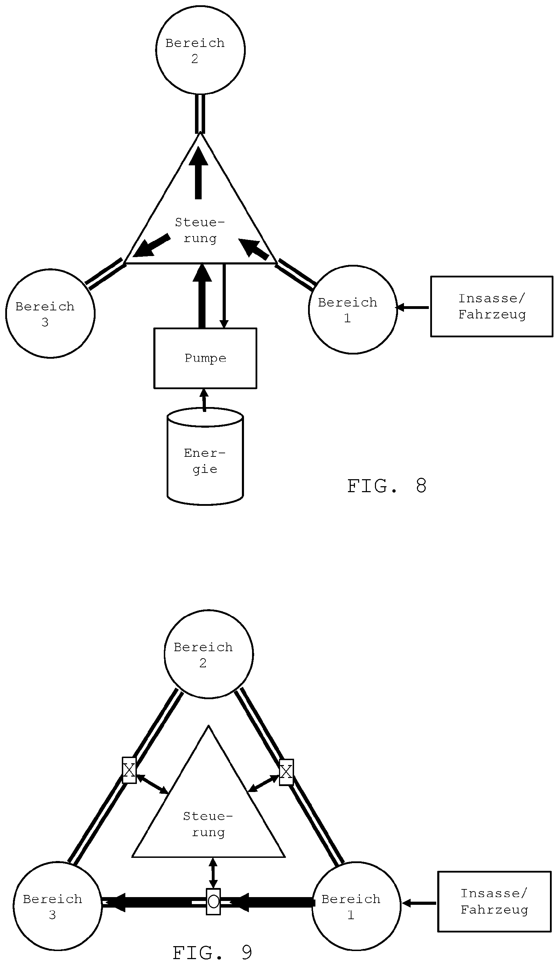

Während die beiden vorangegangenen Figuren die Darstellung in Form eines Ablaufdiagramms verwenden, zeigt die **Figur 8** eine Darstellung, die sich eher an einer tatsächlichen Konstruktion orientiert. Demnach sind die drei aufblasbaren Bereiche (kreisförmig dargestellt) durch fluidführende Leitungen (Doppellinien) mit der Steuerung (Dreieck) verbunden. Auch die Pumpe mit Energiequelle ("aktiv unterstützte" Variante) ist an die Steuerung angeschlossen. Im Beispiel komprimiert der Insasse oder das Fahrzeug aufgrund eines Aufpralls Bereich 1. Von diesem wird die Information in Form einer Druckerhöhung an die Steuerung weitergeleitet. Diese steuert nun die Pumpe an, welche einen zusätzlichen Fluidfluss bereitstellt. Die Steuerung leitet diesen zusammen mit dem Fluidfluss aus Bereich 1 an die Bereiche 2 und 3 weiter.

In der **Figur 9** schließlich ist eine rein "passive" Ausführungsform schematisch dargestellt. Hier sind die drei Bereiche miteinander durch Fluidleitungen miteinander verbunden (Doppellinien). Die Steuerung umfasst Ventile, angedeutet durch die Quadrate. Ein geschossenes Ventil wird durch ein "X", ein offenes durch ein "○" symbolisiert. Die Verbindungen zu diesen Ventilen sind als Doppelpfeile dargestellt, da sie einerseits angesteuert werden können, andererseits (als Information) eine Druckerhöhung weitergeben können.

Wird beispielsweise der Bereich 1 (z.B. ein Basisbereich) vom Insassen oder Fahrzeug komprimiert, erhöht sich der Druck in den von ihm abgehenden Fluidleitungen. Die Steuerung erkennt dies und öffnet das im Bild unten dargestellte Ventil. Das Ventil oben rechts im Bild (zum Bereich 2), sowie das oben links im Bild (zwischen Bereich 2 und Bereich 3) bleibt geschlossen. Somit wird in gezielter Weise das vom Bereich 1 bereitgestellte Fluid lediglich an den Bereich 3 (z.B. Gurtbereich) weitergeleitet, so dass das zur Verfügung stehende, unter Druck stehende, begrenzte Fluidmenge in optimaler Weise eingesetzt wird.

### Bezugszeichenliste

- 1A...6A: erster aufblasbarer Bereich
- 1B...6B: Innenkontur
- 1: Basis
- 2: Rückenlehne
- 2A: aufblasbarer Rückenbereich
- 3,4: Seitenteil
- 3A,4A: Seitenbereich
- 5: Kopfteil
- 5A: aufblasbarer Kopfbereich
- 6: Gurt
- 6A: aufblasbarer Gurtbereich
- 7: Versteifung
- 8: Kühlkanäle
- 9: Klappgelenk
- 10: zusätzliche Kammer
- 11: Tragegriff
- 12: Fixierbereich
- 13: Kontrolleinheit
- 14: Ventil
- 15: Pumpe
- 16A: weiterer aufblasbarer Bereich
- 16B: Außenkontur

## Patentansprüche

1. Sitz eines Transportmittels, aufweisend mindestens einen Protektor in Form eines ersten aufblasbaren Bereichs (1A, 2A, 3A, 4A, 5A, 6A), welcher eine dem Insassen zugewandte Innenkontur (1B, 2B, 3B, 4B, 5B, 6B) aufweist, wobei der Innendruck dieses Bereichs (1A, 2A, 3A, 4A, 5A, 6A) mittels Fluidzu- und -abflusses änderbar ist, wobei der Sitz einen Druckgenerator in Form eines Mittels zur Förderung von Fluid in besagten Bereich (1A, 2A, 3A, 4A, 5A, 6A) umfasst, welches im Falle eines Aufpralls des Transportmittels mittels eines Auslösers aktivierbar ist, wobei der Sitz einen Controller als Mittel zur gezielten Steuerung des Fluidflusses aufweist, so dass durch Ändern des Innendruckes des Protektors mittels eines gezielten, vom Controller gesteuerten, und vom Druckgenerator bewirkten Fluidzu- und/oder -abflusses des Protektors ein verbesserter Unfallschutz durch diesen für den Insassen bereitstellbar ist, wobei der Sitz als Mittel zur Förderung mindestens einen weiteren aufblasbaren Bereich (1A, 2A, 3A, 4A, 5A, 6A, 16A) mit einer zur Aufnahme von äußerem Druck eingerichteten Innenkontur (1B, 2B, 3B, 4B, 5B, 6B) oder Außenkontur (16B) umfasst, und wobei der erste und der weitere Bereich (1A, 2A, 3A, 4A, 5A, 6A) fluidisch dergestalt miteinander verbunden sind, dass bei einer Erhöhung des Druckes auf den weiteren Bereich (1A, 2A, 3A, 4A, 5A, 6A) ein passiver Fluidfluss von diesem zu dem ersten Bereich (1A, 2A, 3A, 4A, 5A, 6A) erreichbar ist, **dadurch gekennzeichnet, dass** das Mittel zur Steuerung zwischen dem ersten und dem weiteren Bereich (1A, 2A, 3A, 4A, 5A, 6A, 16A) angeordnet ist.

2. Sitz nach Anspruch 1, wobei als Mittel zur gezielten Steuerung mindestens ein zwischen dem ersten und dem weiteren Bereich (1A, 2A, 3A, 4A, 5A, 6A, 16A) angeordnetes Ventil (14) vorgesehen ist.

3. Sitz nach Anspruch 2, wobei das Ventil (14) ein Überdruck-Ventil oder ein steuerbares Ventil ist.

4. Sitz nach Anspruch 1, **dadurch gekennzeichnet, dass** der Sitz als weiteres Mittel zur Förderung und/oder als Mittel zur gezielten Steuerung eine zur zusätzlichen Förderung von Fluid in den ersten aufblasbaren Bereich (1A, 2A, 3A, 4A, 5A, 6A) eingerichtete Pumpe (15) oder eine Druckgas-Kartusche umfasst, welche mit einem Mittel zur Detektion eines Aufpralls aktivierbar ist, so dass ein aktiv unterstützter Fluidfluss in den ersten Bereich (1A, 2A, 3A, 4A, 5A, 6A) erreichbar ist.

5. Sitz nach einem der vorhergehenden Ansprüche, wobei
- die Innenkonturen (3B, 4B, 5B) von an den Seiten (3, 4) angeordneten Seitenbereichen (3A, 4A) oder Kopfbereichen (5A) so ausgestaltet sind, dass sie durch Erhöhung ihres Innendruckes einander annäherbar sind, und/oder
- wobei eine Rückenlehne (2) einen aufblasbaren Rückenbereich (2A) mit einer änderbaren und/oder zur Aufnahme von Druck eingerichteten Innenkontur (2B) umfasst, und/oder
- wobei ein Gurt (6) mindestens einen aufblasbaren Gurtbereich (6A) mit einer änderbaren und/oder zur Aufnahme von Druck eingerichteten Innenkontur (6B) umfasst oder daraus besteht.

6. Sitz nach einem der vorhergehenden Ansprüche, wobei der Sitz ein am Sitz eines Fahrzeugs anbringbarer Kindersitz ist.

7. Sitz nach einem der vorhergehenden Ansprüche, wobei eine Rückenlehne (2) eine mittig angeordnete Versteifung (7) zur weiteren Verbesserung der strukturellen Stabilität aufweist.

8. Sitz nach einem der vorhergehenden Ansprüche, ferner umfassend mindestens eines der nachfolgenden Merkmale:
- Kühlkanäle (8) zur Luftzirkulation in der Rückenlehne (2) und/oder den Seitenteilen (3, 4) und/oder der Basis (1) und/oder dem Kopfteil (5) und/oder dem Gurt (6);
- eine zusätzliche Kammer (10), enthaltend ein durch entsprechende Kanäle innerhalb der aufblasbaren Bereiche (1A, 2A, 3A, 4A, 5A, 6A) zirkulierbares Kühlmittel;
- eine Kontrolleinheit (13), eingerichtet zur Überwachung (Messen, Anzeigen, Abspeichern, Senden) von Innendruck und/oder Beschleunigung und/oder bestimmungsgemäßem Gebrauch des Kindersitzes.

9. Sitz nach Anspruch 8, wobei die Kontrolleinheit (13) mit mindestens einer Pumpe (15), oder mit einer Mehrzahl von den Fluidfluss vom ersten zu den weiteren Bereichen (1A, 2A, 3A, 4A, 5A, 6A, 16A) steuernden Ventilen (14) verbunden ist, so dass im Falle eines Aufpralls der Fluidstrom in diese oder zwischen diesen Bereichen (1A, 2A, 3A, 4A, 5A, 6A, 16A) gezielt steuerbar ist.

10. Verfahren zum Schutz eines in einem Sitz befindlichen Insassen, der Sitz aufweisend mindestens einen Protektor in Form eines ersten aufblasbaren Bereiches (1A, 2A, 3A, 4A, 5A, 6A), wobei eine dem Insassen zugewandte Innenkontur (1B, 2B, 3B, 4B, 5B, 6B) dieses Bereichs (1A, 2A, 3A, 4A, 5A, 6A) zur Aufnahme von Druck eingerichtet und/oder mittels Fluidflusses in besagten Bereich (1A, 2A, 3A, 4A, 5A, 6A) änderbar ist, wobei im Falle eines Aufpralls durch einen von einem Auslöser aktivierten Druckgenerator in Form eines Mittels zur Förderung von Fluid unter gezielter Steuerung Fluid in besagten Bereich (1A, 2A, 3A, 4A, 5A, 6A) gefördert wird, so dass durch gezielte Aufnahme von Druck und/oder gezieltes Ändern der Innenkontur (1B, 2B, 3B, 4B, 5B, 6B) dieses Protektors durch diesen ein verbesserter Unfallschutz für den Insassen bereitgestellt wird, **dadurch gekennzeichnet, dass** als Mittel zur Förderung mindestens ein weiterer aufblasbarer Bereich (1A, 2A, 3A, 4A, 5A, 6A, 16A) mit einer zur Aufnahme von äußerem Druck eingerichteten Innenkontur (1B, 2B, 3B, 4B, 5B, 6B) oder Außenkontur (16B) vorgesehen ist, wobei der erste und der weitere Bereich (1A, 2A, 3A, 4A, 5A, 6A, 16A) fluidisch miteinander verbunden sind, so dass bei einer Erhöhung des Druckes in dem weiteren Bereich (1A, 2A, 3A, 4A, 5A, 6A, 16A) oberhalb eines vorbestimmbaren Wertes ein passiver, druckgetriebener Fluidfluss von diesem zu dem ersten Bereich (1A, 2A, 3A, 4A, 5A, 6A) erreicht wird, und ein Fluidfluss in entgegengesetzter Richtung von einem zwischen dem ersten und dem weiteren Bereich (1A, 2A, 3A, 4A, 5A, 6A, 16A) angeordneten Mittel zur Steuerung unterbunden wird.

11. Verfahren nach Anspruch 10, wobei das Mittel zur Steuerung in Form eines Überdruck-Ventils oder eines steuerbaren Ventils vorgesehen ist.

12. Verfahren nach Anspruch 10 oder 11, wobei die Druckerhöhung im weiteren Bereich (1A, 2A, 3A, 4A, 5A, 6A) mittels des auf diesen aufgrund der Trägheit im Falle eines Aufpralls drückenden Kindes hervorgerufen wird, und/oder wobei die Druckerhöhung im weiteren Bereich (16A) mittels des auf diesen aufgrund der Trägheit im Falle eines Aufpralls drückenden Fahrzeugs hervorgerufen wird.

13. Verfahren nach Anspruch 12, **dadurch gekennzeichnet, dass** als weiteres Mittel zur Förderung und/oder als Mittel zur Steuerung eine zur zusätzlichen Förderung von Fluid in den ersten aufblasbaren Bereich (1A, 2A, 3A, 4A, 5A, 6A) eingerichtete Pumpe (15) oder eine Druckgas-Kartusche bereitgestellt ist, mittels welcher im Falle eines Aufpralls ein aktiv unterstützter Fluidfluss in den ersten Bereich (1A, 2A, 3A, 4A, 5A, 6A) erreicht wird.

14. Verfahren nach einem der Ansprüche 12 bis 13, wobei
- beim normalen Gebrauch ein Abstand zwischen Innenkonturen (3B, 4B, 5B) aufblasbarer Seitenbereiche (3A, 3B) oder Kopfbereiche (5A) einen ersten Abstandswert einnimmt, so dass der Insasse eine ausreichende Bewegungsfreiheit hat, während
- im Falle eines Aufpralls, aufgrund des gezielten Fluidstroms zu den aufblasbaren Seitenbereichen (3A, 4A) oder Kopfbereichen (5A), diese versuchen, den Abstand zwischen ihren Innenkonturen (3B, 4B, 5B) zu verringern, und somit eine umarmungsgleiche Schutzbewegung in Richtung des Insassen durchführen.

15. Verfahren nach einem der Ansprüche 10 bis 14, wobei dieses unter Verwendung eines Sitzes gemäß Definition in einem der Ansprüche 1 bis 9 erfolgt.
